# EUROPÄISCHE PATENTANMELDUNG

(11) **EP 1 185 035 A1**
(43) Veröffentlichungstag der Anmeldung: **06.03.2002**
(21) Anmeldenummer: 00118481.1
(22) Anmeldetag: 25.08.2000
(51) Int. Cl.: H04L 12/56, H04L 12/64, H04L 12/66

(54) **System zur Entdeckung von H.323 Gatekeepers in Datennetzen**

(71) Anmelder: Media-Streams.com AG, 8105 Regensdorf (CH)
(72) Erfinder: Die Erfindernennung liegt noch nicht vor
(74) Vertreter: Braun, André

(57) **Zusammenfassung**

Das rechnergestützte Sprachkommunikationssystem ("Voice over IP") entsprechend dem H.323-Standard umfasst mindestens einem Gateway (7,8) für den Übergang vom öffentlichen Telefonnetz in ein benutzereigenes Datennetz, mindestens zwei Gatekeeper (5,6) für die Verwaltung der Komponentenadressen und deren Zuordnung zu öffentlichen Telefonnummern, sowie eine Anzahl von Arbeitsplatzrechnern ("Clients") (11,12). Die zwischen Gateways (7,8) oder Terminals (11,12) einerseits und Gatekeepern (5,6) andererseits ausgetauschten Meldungen sind mit einer Time-to-Live (ttl)-Funktion versehen. Im Fall eines erfolglosen Meldungsaustausches infolge eines Ausfalls einer Komponente oder einer Relation wird automatisch eine weitere Meldung mit einem höheren ttl-Wert ausgesendet.

## Beschreibung

Die Erfindung betrifft ein rechnergestütztes Sprachkommunikationssystem ("Voice over IP") entsprechend dem H.323-Standard mit mindestens einem Gateway für den Uebergang vom öffentlichen Telefonnetz in ein benutzereigenes Datennetz, mindestens zwei Gatekeepern für die Verwaltung der Komponentenadressen und deren Zuordnung zu öffentlichen Telefonnummern, sowie einer Anzahl von Arbeitsplatzrechnern ("Clients").

Die wichtigsten Komponenten eines H.323 Kommunikationssystems sind Gateway, Gatekeeper, Arbeitsplätze oder Clients, sowie optional Client Proxy Server.Der Gateway bildet den Übergang vom öffentlichen Telefonnetz (ISDN/PSTN) in ein benutzereigenes, beispielsweise privates oder firmeninternes, Datennetz (LAN/Intranet). Die wichtigste Aufgabe des Gateways ist die Übersetzung des ISDN Protokolls in den H.323 Standard, welcher für die Sprachkommunikation in IP basierenden Datennetzen (Voice over IP) verwendet wird. Ein Gateway benötigt eine voreingestellte IP-Adresse mit der er sich beim Systemstart beim Gatekeeper registriert.

Beim Gatekeeper handelt es sich im wesentlichen um einen Verzeichnisdienst, bei welchem sich jede Komponente (Gateway, Clients und ggf. Client Proxy Server) beim Start registrieren muss. Der Gatekeeper nimmt auch die Zuordnung zwischen der ISDN-Rufnummer und der zugehörigen IP-Adresse vor.

Falls der für einen Client zuständige Gatekeeper ausfällt oder die Relation in irgendeiner Weise gestört ist, fällt die Sprachkommunikation aus, d.h. es können weder ausgehende Anrufe getätigt noch eingehende Anrufe entgegengenommen werden. Dies ist ein Zustand, der zwar der Situation bei klassischen Telefonnetzen entspricht, aber dennoch sehr unbefriedigend ist.

Der Erfindung liegt daher die Aufgabe zugrunde, diesem Zustand Abhilfe zu schaffen.

Erfindungsgemäss wird dies bei einem Sprachkommunikationssystem der eingangs erwähnten Art dadurch erreicht, dass die zwischen Gateways oder Terminals einerseits und Gatekeepern andererseits ausgetauschten Meldungen mit einer Time-to-Live (ttl)-Funktion versehen sind und dass im Fall eines erfolglosen Meldungsaustausches infolge eines Ausfalls einer Komponente oder einer Relation automatisch mindestens eine weitere Meldung ausgesendet wird, bei welcher der ttl-Wert um mindestens "eins" erhöht wird.

Damit wird die Voraussetzung geschaffen, dass mehrere Gatekeeper in einem grösseren Firmennetz automatisiert kommunizieren können. Dadurch wird die beliebige und dynamische Skalierbarkeit des Systems ermöglicht.

Zusätzliche Gatekeeper dienen primär der Lastverteilung bei grösseren Systemen und tragen zur erhöhten Ausfallsicherheit bei, indem die Dienste auf mehrere Server verteilt werden. Mit dem vorstehend erwähnten speziellen H.323 Gatekeeper melden sich die Clients bei dessen Ausfall automatisch an einem anderen Gatekeeper an. Der Gatekeeper erlaubt es ebenfalls, fremde Gatekeeper-Dienste mit einzubinden.

Der Client Proxy Server übernimmt die wichtigsten Funktionalitäten der Clients, falls diese abwesend sind. Beispielsweise werden Rufumleitungen auf ein Mobiltelefon oder benutzerspezifische Voicemail-Funktionalität wahrgenommen.

Die Arbeitsplätze werden auch als Clients bezeichnet. Beim Start des Arbeitsplatzrechners wird automatisch die Telefonfunktionalität gestartet. Dabei sucht sich der Client selbsttätig den nächstgelegenen Gatekeeper und registriert sich bei diesem als Teilnehmer.

Soll ein Anruf erfolgen, wird der Gatekeeper kontaktiert, um das Anrufziel aufzulösen. Das heisst, dass der Gatekeeper den Anruf entweder an einen anderen Client weiterleitet oder bei externen Gesprächen an einen registrierten Gateway vermittelt.

Das erfindungsgemässe System ist durch die Verwendung des speziellen H.323 Gatekeepers beliebig von einem bis unendlich vielen Teilnehmern skalierbar. Dies wird durch zwei Mechanismen erreicht:

Clients können sich an jedem beliebigen Gatekeeper im Netz registrieren. Es wird immer zuerst der nächste Gatekeeper kontaktiert.

Gatekeeper suchen beim Start automatisch andere Gatekeeper, welche im Netz registriert sind. Kann ein Gatekeeper ein Anrufziel nicht auflösen, gibt er den Anruf an die anderen Gatekeeper weiter, bis der für das Ziel zuständige den Anruf auflösen kann.

Durch die Verwendung des speziellen H.323 Protokollstacks und des darauf basierenden Gatekeepers wird die Ausfallsicherheit des Systems entscheidend erhöht. Die folgenden Mechanismen sind integriert:

Findet der Gatekeeper bei einem eingehenden Anruf den entsprechenden Client nicht, so transferiert er den Anruf an den Client Proxy Server.

Verliert ein Client durch eine Störung die Verbindung zu seinem Gatekeeper, sucht er automatisch in der Nachbarschaft einen neuen Gatekeeper und registriert sich.

Stellt ein Client fest, dass ein Gatekeeper in der näheren Nachbarschaft gestartet wird, so registriert er sich automatisch bei diesem neu.

Verliert der Gatekeeper durch eine Störung im Client die Verbindung, so wird der Client automatisch aus der Registrierung gelöscht.

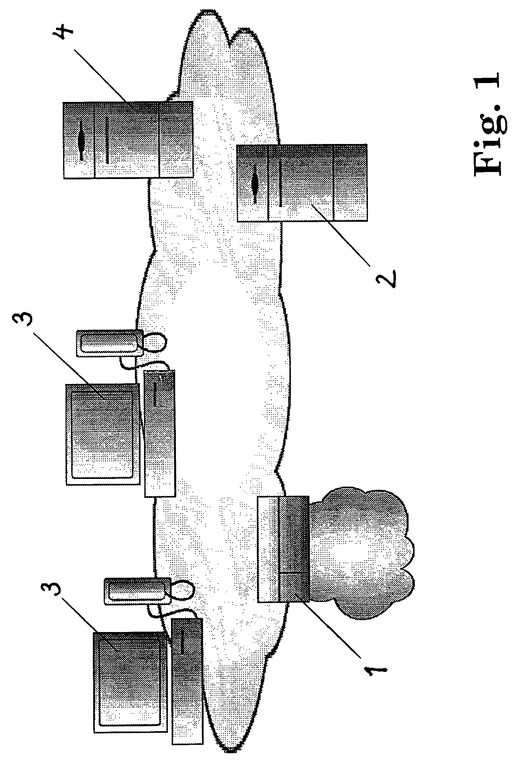

Im folgenden ist anhand der beiliegenden Zeichnungen ein Ausführungsbeispiel der Erfindung näher beschrieben. Es zeigen
- Fig. 1: ein Schema eines Datennetzes mit den im H.323-Standard definierten Komponenten
- Fig. 2: ein Datennetz gemäss der Erfindung
- Fig. 3: die Situation beim Ausfall des Gatekeepers
- Fig. 4: die Situation beim Ausfall eines Proxy-Servers

Gemäss dem H.323-Standard sind folgende Komponenten vorgeschrieben: Ein Gateway 1 für die Umsetzung von ISDN zu IP, ein Gatekeeper 2 für die Adressumwandlung zwischen IP-Adressen und Telefonnummern, ein oder mehrere Terminals 3, d.h. Arbeitsplatzrechner, die auch als Sprachendgerät geeignet sind. Optional kann ein Konferenzserver 4 (MCU) enthalten sein. Die Komponenten sind durch ein Datennetz, beispielsweise Switched Ethernet, untereinander verbunden.

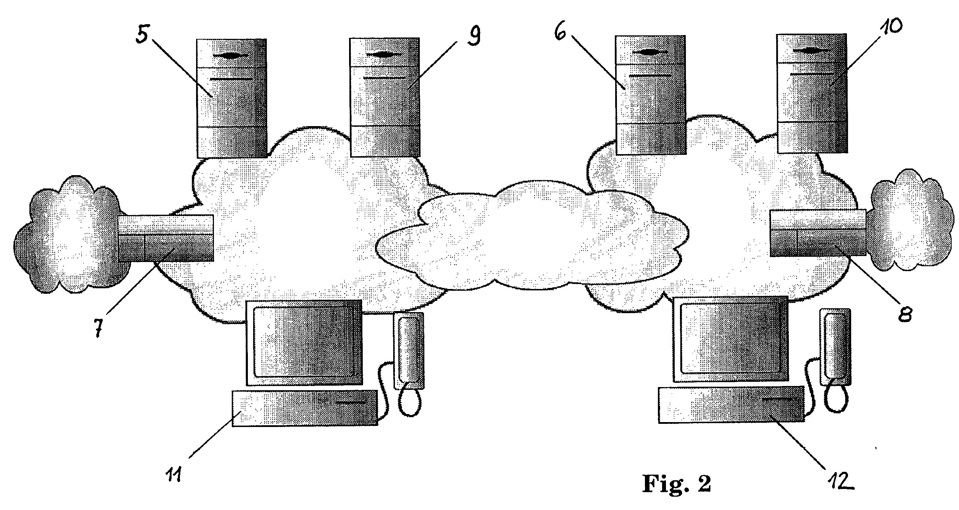

Der in Fig. 2 dargestellte Normalbetrieb läuft wie folgt ab: In einem ersten Schritt wird die Gatekeeper-Applikation installiert. Um eine hohe Verfügbarkeit zu erzielen, sind mindestens zwei Gatekeeper 5,6 installiert.

Sobald die Gatekeeper in Betrieb sind, werden in einem nächsten Schritt die Gateways 7,8 in Betrieb genommen. In der Start-up Prozedur senden sie eine sog. Multicast RAS-Meldung mit ttl=l (Time-to-Live) senden. ttl=l heisst, dass diese Meldung nach dem ersten Router (Layer 3 Switching) nicht mehr weiter gesendet wird. Sobald ein Gatekeeper diese Meldung empfängt, antwortet er mit der entsprechenden Quittungsmeldung. Danach kennen sich die beiden Komponenten Gateway und Gatekeeper.

Antwortet kein Gatekeeper in einer bestimmten Zeit auf die Meldung, versendet der Gateway erneut eine RAS Meldung mit dem Wert ttl=2. Der Gateway sucht nun in einem grösseren Bereich nach einem Gatekeeper. Dies wird mit jeweils erhöhten ttl-Werten so lange fortgesetzt, bis ein Gatekeeper gefunden ist oder bis zu einem vordefinierten Limit.

Derselbe Mechanismus wird verwendet, damit sich mehrere Gatekeeper finden.

In einem nächsten Schritt werden die Proxy-Server 9,10 gestartet. Der Proxy Server ist keine standardisierte H.323 Komponente. Aus Sicht der H.323- Definition verhält er sich wie ein Terminal. Die Proxy-Server senden die RAS Meldungen mit demselben Verfahren wie die Gateways. Hat ein Proxy-Server den nächstliegenden Gatekeeper gefunden, so registriert er sich mit einem Proxy-alias.

Alle Terminals 11,12 die anschliessend aufgestartet werden, suchen den Gatekeeper wiederum nach demselben Prinzip. Zusätzlich senden die Terminals noch ihre Konfigurationsparameter zum zuständigen Proxy-Server. Dies erfolgt bei jedem Start-up, bei Konfigurationsänderungen und beim Ausschalten der Terminals.

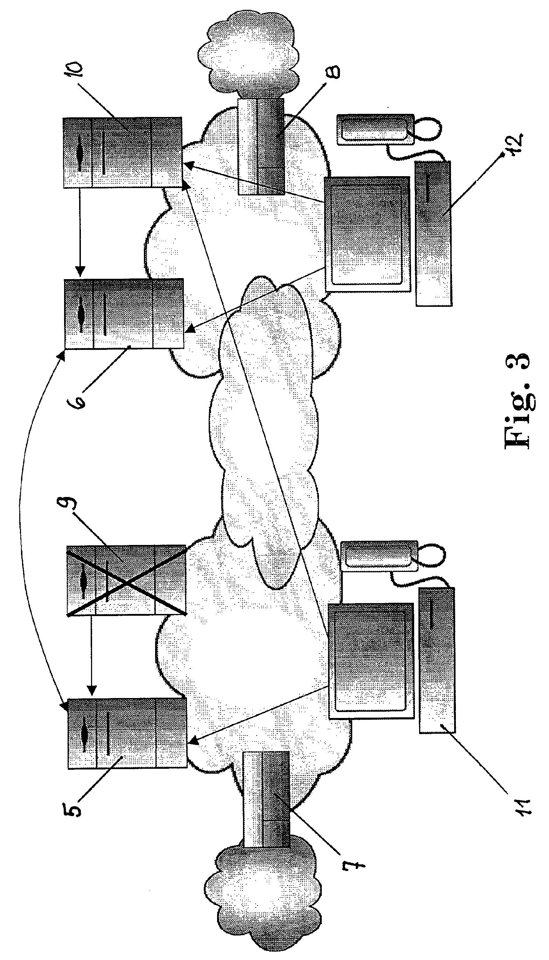

Falls ein Proxy-Server ausfällt ergibt sich die in Fig. 3 dargestellte Situation. So lange keine weiteren Terminals aufstarten oder ausgeschaltet werden, gibt es keine Reaktion. Wird nun beispielsweise Terminal 11 ausgeschaltet, so möchte es seine aktuelle Konfiguration dem Proxy-Server 9 mitteilen. Um dies zu tun, wird versucht, eine H.323-Verbindung via Gatekeeper 5 zum Proxy-Server 9 aufzubauen. Der Gatekeeper 5 stellt fest, dass der Proxy-Server 9 nicht reagiert.

Der Gatekeeper 5 versucht nun den Gatekeeper 6 anzufragen, ob bei ihm ein Proxy-Server verfügbar ist. Ist dies der Fall, teilt der Gatekeeper 6 die Adresse des Proxy-Servers 10 via Gatekeeper 5 dem Terminal 11 mit. Terminal 11 kann nun Proxy-Server 10 mit den aktuellen Konfigurationsdaten versorgen.

Kommt nun ein externer Anruf für Terminal 11 an, so endet er auf dem Gatekeeper 5. Gatekeeper 5 stellt fest, dass das Terminal 11 nicht mehr angemeldet ist. Es wird nun ein sog. Location Request zum Gatekeeper 6 gesendet. Gatekeeper 6 meldet zurück, dass das Terminal 11 auch bei ihm nicht angemeldet ist.

Gatekeeper 5 möchte nun den Anruf zu einem Proxy-Server weiterleiten. Da beim Gatekeeper 5 kein Proxy-Server mehr registriert ist, wird wiederum ein Location Request zum Gatekeeper 6 gesendet für das Proxy alias. Gatekeeper 6 gibt eine positive Rückmeldung mit der Adresse des Proxy-Servers 10.

Der Anruf kann nun an den Proxy-Server 10 weitergeleitet werden.

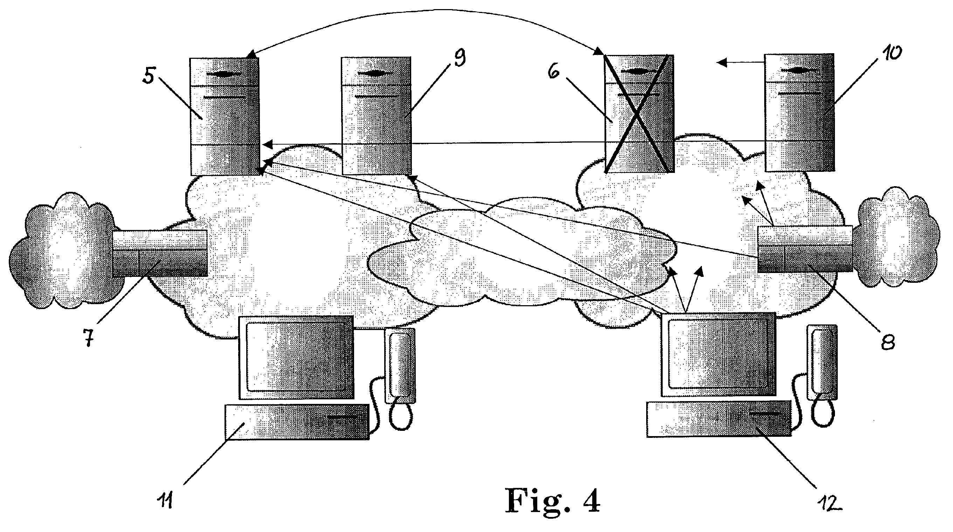

Falls einer der Gatekeeper ausfällt, ergibt sich die in Fig. 4 dargestellte Situation. Das Terminal 12 verliert die Verbindung zum Gatekeeper 6. Mit demselben Mechanismus wie beim Start-up sucht das Terminal 12 einen neuen Gatekeeper in einem grösseren Bereich. Das Terminal 12 erhält dann von vom Gatekeeper 5 eine Antwort und kann sich dort registrieren.

Im nächsten Schritt versorgt das Terminal 12 den jetzt neu zuständigen Proxy-Server 9 mit seinen Konfigurationsdaten, da der Proxy-Server 10 nicht mehr erreichbar mehr ist. Damit ist das Terminal 12 wieder voll funktionsfähig.

Im Terminal 12 ist allerdings die Information gespeichert, dass normalerweise ein näherer Gatekeeper zuständig ist. Es prüft deshalb periodisch, ob dieser wieder verfügbar ist. Sobald dies der Fall ist, registriert es sich wieder am Gatekeeper 6.

In derselben Art und Weise sucht sich das Gateway 8 einen neuen Gatekeeper. Dies bedeutet, dass der Gatekeeper 5 die doppelte Gatewaykapazität hat, solange der Gatekeeper 6 nicht verfügbar ist.

Jedesmal, wenn der Client einen neuen Gatekeeper findet, initiiert er zweckmässigerweise auch einen Datenabgleich mit dem entsprechenden Proxy-Server.

## Patentansprüche

1. Rechnergestütztes Sprachkommunikationssystem ("Voice over IP") entsprechend dem H.323-Standard mit mindestens einem Gateway für den Uebergang vom öffentlichen Telefonnetz in ein benutzereigenes Datennetz, mindestens zwei Gatekeepern für die Verwaltung der Komponentenadressen und deren Zuordnung zu öffentlichen Telefonnummern, sowie einer Anzahl von Arbeitsplatzrechnern ("Clients"), **dadurch gekennzeichnet, dass** die zwischen Gateways oder Terminals einerseits und Gatekeepern andererseits ausgetauschten Meldungen mit einer Time-to-Live (ttl)-Funktion versehen sind und dass im Fall eines erfolglosen Meldungsaustausches infolge eines Ausfalls einer Komponente oder einer Relation automatisch mindestens eine weitere Meldung ausgesendet wird, bei welcher der ttl-Wert um mindestens "eins" erhöht wird.
